# EUROPEAN PATENT SPECIFICATION

(11) **EP 1 982 763 B1**
(45) Date of publication and mention of the grant of the patent: **24.04.2019**
(21) Application number: 07713982.2
(22) Date of filing: 09.02.2007
(51) Int. Cl.: B01J 23/22, B01D 53/86, B01D 53/94, B01J 23/28, B01J 23/30, B01J 37/02

(54) **CATALYST FOR OXIDIZING MERCURY METAL, EXHAUST GAS PURIFYING CATALYST COMPRISING CATALYST FOR OXIDIZING MERCURY METAL, AND METHOD FOR PRODUCING SAME**
KATALYSATOR ZUR OXIDIERUNG VON QUECKSILBER, ABGASREINIGUNGSKATALYSATOR MIT EINEM KATALYSATOR ZUR OXIDIERUNG VON QUECKSILBER UND HERSTELLUNGSVERFAHREN DAFÜR
CATALYSEUR POUR L'OXYDATION DE MERCURE METALLIQUE, CATALYSEUR POUR LE PURIFICATION D'UN GAZ D'ECHAPPEMENT COMPRENANT UN CATALYSEUR POUR L'OXYDATION DE MERCURE METALLIQUE ET SON PROCEDE DE FABRICATION

(30) Priority: 09.02.2006 JP 2006032803
(43) Date of publication of application: 22.10.2008
(73) Proprietor: Mitsubishi Hitachi Power Systems, Ltd., Yokohama 220-8401 (JP)
(72) Inventor: KAI, Keiichiro, Kure-shi, Hiroshima 737-8507 (JP); KATO, Yasuyoshi, Kure-shi, Hiroshima 737-8507 (JP); IMADA, Naomi, Kure-shi, Hiroshima 737-8507 (JP)
(74) Representative: Strehl Schübel-Hopf & Partner
(86) International application number: PCT/JP2007/052326
(87) International publication number: WO 2007/091669

(56) References cited:
- EP-A1- 1 340 539
- GB-A- 298 142
- JP-A- 07 299 331
- JP-A- 2003 053 142
- JP-A- 2005 125 211
- JP-A- 2005 125 211
- US-A- 2 799 560
- US-A- 2 973 371
- US-A- 3 518 206
- US-A- 3 884 835
- US-A- 4 742 037
- A Baker ET AL: "Mixed Gels of Vanadia and Silica: Structural Properties and Catalytic Behavior in Selective Reduction of Nitric Oxide with Ammonia", JOURNAL OF CATALYSIS, 1 January 1988 (1988-01-01), pages 273-285, XP055119987, Retrieved from the Internet: URL:http://ac.els-cdn.com/0021951788900863 /1-s2.0-0021951788900863-main.pdf?_tid=376 c3882-e4af-11e3-9868-00000aab0f6b&acdnat=1 401092875_0a538543710966d92810bd2cf112d6bf [retrieved on 2014-05-26]

## Description

### Technical Field

The present invention relates to techniques for removing mercury metal existing in exhaust gas, and particularly relates to a catalyst for oxidizing mercury metal used to remove mercury metal discharged from thermal power plants that use fossil fuels, an exhaust gas-purifying catalyst with such a catalyst for oxidizing mercury metal, and a method for producing the same.

### Background Art

Exhaust gas-purifying techniques for thermal power plants that use fossil fuels as an energy source have developed mainly aiming at reduction of NOx, SOx and particles; however, air emission of trace components, such as Hg, As, Cd, Pd and Ce, has recently attracted attention. Among other components, elements or compounds with high vapor pressure are easily emitted into the air and their toxicity causes health issues. This leads to tightening of emission regulations for such trace elements in United States and other countries. In particular, mercury vapor is a toxic substance that affects the nervous system and exposure to concentrated mercury vapor brings human beings chronic mercury poisoning, significantly affects human development stages, and causes shivering, stuttering, dysarthria and other disorders. Furthermore, once contained in water, mercury changes from inorganic mercury into organic mercury and then accumulates in fishery products, thereby disserving human beings when they eat such fishery products. This makes mercury contamination widespread. Therefore, mercury will be put under especially strict control prior to other elements.

Mercury discharged from thermal power plants may take the form of metal or an oxidized form. Mercury in such an oxidized form, in particular, mercury chloride generated through the reaction with hydrogen chloride or chlorine existing in exhaust gas, has a low vapor pressure and is soluble. Such mercury is likely to be fixed in ashes or absorbing solution used in desulfurization apparatuses, and thus can be easier to collect and remove. On the other hand, mercury in the form of metal cannot be fixed to exhaust gas or other particles, and thus stays in a gas phase even at temperatures close to atmospheric temperature. Therefore, it is difficult to remove mercury in the form of metal with a known dust-removing device such as an electrostatic precipitator or a bug filter.

Examples of mercury-removing techniques used to solve this difficulty are as follows: the activated carbon adsorption method, in which adsorbent such as activated carbon is introduced into exhaust gas so as to adsorb mercury and then the adsorbent capturing mercury is collected with a bug filter; and the sodium hypochlorite absorption method, in which sodium hypochlorite absorbing solution for desulfurization apparatuses or circulating water for wet electrostatic precipitators is added. However, the activated carbon adsorption method requires a lot of activated carbon and thus is very costly, although it provides a high mercury-removing efficiency. The sodium hypochlorite absorption method is also costly and causes additional problems such as corrosion of the inside of apparatuses and how resulting water should be disposed of.

To address these problems, studies have been conducted to develop a method that requires less operational cost and facility investment than the abovementioned mercury-removing methods require, in which a solid catalyst capable of oxidizing mercury is used to oxidize mercury metal into mercury in an oxidized form with a low vapor pressure and then the mercury in an oxidized form is removed with a dust-removing device or a desulfurization apparatus in a downstream process. For example, in a certain proposed method, a Ti-V catalyst is used in the presence of halides to oxidize mercury metal into mercury chloride (see Patent Documents 1 and 2).

The abovementioned mercury-processing method using a Ti-V catalyst is suitably used with the temperature of exhaust gas being relatively low, for example, at 300°C or lower, or in other similar situations. This is because mercury in an oxidized form (mercury chloride) is instable at temperatures equal to or higher than 300°C, in particular, at high temperatures close to 350°C, at which a standard NOx-removing catalyst is used, and this often makes inconsistent efficiency in oxidizing mercury via catalytic reaction. Furthermore, Ti-V catalysts are catalysts that have been known as NOx-removing catalysts and have high NOx-removing activities, but it is also well known that such catalysts acquire higher SO₂-oxidizing activity as the concentration of vanadium, an active component, and/or their temperature increase. Therefore, increasing the vanadium concentration in a Ti-V catalyst to enhance the mercury-oxidizing activity also enhances the SO₂-oxidizing efficiency, and using such a catalyst in a temperature range for NOx-removing apparatuses further enhances the SO₂-oxidizing efficiency and reduces the mercury-oxidizing activity. This makes it difficult to use a Ti-V catalyst in high-temperature exhaust gas or exhaust gas containing SO₂ at a high concentration.
Patent Document 1: Japanese Unexamined Patent Application Publication No. 2005-125211
Patent Document 2: Japanese Unexamined Patent Application Publication No. 2003-53142

### Disclosure of Invention

The objectives of the present invention are to realize a catalyst having high capability of oxidizing mercury even at high temperatures for the use of NOx-removing catalysts (close to 350°C) while having a low oxidization efficiency for SO₂ and to provide a method for oxidizing mercury that can be applied to high-temperature exhaust gas or exhaust gas containing SO₂ at a high concentration.

The inventors sought for a catalyst that can oxidize mercury metal at a high efficiency while preventing oxidation of SO₂ even at typical exhaust gas temperatures for the use of NOx-removing catalysts in exhaust gas-processing systems for thermal power plants, i.e., at temperatures close to 350°C, and as a result, they found that V supported by Si has a high mercury metal-oxidizing activity and a low SO₂-oxidizing activity.

More specifically, the abovementioned problem can be solved by a catalyst as set forth in claim 1 or claim 2.

The abovementioned catalysts for oxidizing mercury metal can be produced by a method in accordance with claim 3.

It is unclear why V supported by Si, namely a Si-V catalyst, has a mercury metal-oxidizing activity but exhibits no SO₂-oxidizing activity; however, anyway, the use of a Si-V catalyst with such characteristics as a catalyst for oxidizing mercury metal enables maintaining a high oxidizing efficiency for mercury metal while reducing the SO₂-oxidizing efficiency to a similar or lower level because this catalyst is free from the problem of increase in the SO₂-oxidizing efficiency accompanied by improvement of the mercury metal-oxidizing efficiency, which cannot be helped in known Ti-V catalysts, even with the concentration of vanadium, an active component for mercury metal oxidation, being high.

The composition of such a catalyst for oxidizing mercury metal composed of silicon oxide and vanadium oxide (hereinafter, referred to as a Si-V catalyst) has preferably a Si/V atomic ratio within the range of 99.5/0.5 to 85/15, and more preferably a Si/V atomic ratio within the range of 98/2 to 90/10. The Si/V ratio exceeding the boundary (99.5/0.5) would result in an insufficient activity because the amount of supported V is too small, whereas the Si/V ratio being lower than the boundary (85/15) is also problematic because a surplus portion of the active component V that cannot be supported by SiO₂ due to the too large amount of supported V causes clogging of fine pores.

### Brief Description of the Drawings

Fig. 1 is a drawing showing the test conditions for the test in which mercury metal existing in exhaust gas was oxidized.
Fig. 2 is a drawing in which test results are compared among the tests each using one of the Si-V catalysts described in Examples 1 to 3 and the test using the Ti-V catalyst described in Comparative Example 1.
Fig. 3 is a drawing in which test results are compared among the tests each using one of the Si-V catalysts supported by a catalyst with a NOx-removing capability and described in Examples 4 to 7 and the tests each using one of the Ti-V catalysts supported by a catalyst with a NOx-removing capability and described in Comparative Examples 2 and 3.
Fig. 4 is a drawing showing the data listed in Figs. 2 and 3 as a graph.

### Best Mode for Carrying Out the Invention

Examples of the material of silicon oxide used in such a Si-V catalyst may include organic compounds such as Si(OCH₃)₄ and inorganic compounds such as SiCl₄, Si(OH)₄, silica particles and colloidal silica. Examples of the material of vanadium oxide may include sol obtained by dispersing tetravalent or pentavalent vanadium oxide in a dispersion medium, as well as various kinds of vanadium compounds such as vanadium-containing hydroxides, ammonium salt, oxalate, sulfate and halides.

Such a Si-V catalyst can be prepared in the known method in which a liquid mixture of one or more of the abovementioned Si materials and one or more of the abovementioned V materials are mixed by heating, and then dried and/or fired. In this method, using colloidal silica as the Si material and gelatinizing a liquid mixture of this colloidal silica and a vanadium compound by adjusting pH thereof make vanadium easy to be supported by silica, and as a result, vanadium is highly dispersed on silica, providing a catalyst with a higher activity.

As the carrier that supports such a Si-V catalyst, various kinds of inorganic porous carriers may be used; for example, honeycomb-like carriers obtained by corrugating inorganic fiber sheets, nonwoven sheets made from inorganic fiber, ceramic honeycomb carriers containing cordierite, alumina or other ceramics, and nets obtained by weaving yarn of inorganic fiber such as E-glass fiber can be used. Furthermore, metal mesh, metal laths and other nets supporting the inorganic fiber described above can also be used.

The method for fixing a Si-V catalyst to such various kinds of inorganic porous carriers may be known methods including a method in which an inorganic porous carrier is immersed in slurry obtained by adding water to particles of the catalyst and the thus-obtained mixture is dried and/or fired, and another method in which an inorganic porous carrier is immersed in a liquid mixture of colloidal silica and a vanadium compound and the thus-obtained mixture is dried and/or fired to form and fix the catalyst directly in the carrier. In these methods, the amount of the supported Si-V catalyst is preferably in the range of 20 to 200 g/m², and if it is in the range of 100 to 150 g/m², then favorable results are often obtained. If the amount of the supported catalyst is too small, the performance is insufficient. However, a too large amount of the supported catalyst would unfortunately cause detachment of the catalyst. When a material is fired, the firing temperature is preferably in the range of 300 to 600°C.

Furthermore, such a Si-V catalyst is supported by a catalyst with a reaction activity for NO and NH₃, which may be a plate-like or honeycomb-like catalyst having the capability of NOx removal. As the method for making the catalyst supported, the following methods may be used: a method in which the surface of the abovementioned NOx-removing catalyst is coated with slurry of a Si-V catalyst prepared in the method described above and the thus-obtained mixture is dried and/or fired, and another method in which a NOx-removing catalyst is directly immersed in a sol mixture of colloidal silica and vanadium oxide sol and the thus-obtained mixture is dried and/or fired. In these methods, the amount of the Si-V catalyst supported by the NOx-removing catalyst is preferably in the range of 20 to 50 g/m². If the amount of the supported catalyst is too small, the performance is insufficient. However, a too large amount of the supported catalyst would unfortunately cause decrease in the activity of the NOx-removing catalyst. When a material is fired, the firing temperature is preferably in the range of 300 to 600°C.

Instead of the plate-like or honeycomb-like catalyst having the capability of NOx removal, a porous catalyst having the capability of NOx removal may be used. In this case, the NOx-removing porous catalyst is also directly immersed in a sol mixture of colloidal silica and vanadium oxide sol, and the fine pores of the catalyst are impregnated with the sol mixture so as to support it. Thereafter, the thus-obtained mixture is dried and/or fired.

Additionally, in the coating process mentioned above, a commonly used binder component such as TiO₂, SiO₂ and Al₂O₃ may be mixed beforehand with slurry of the catalyst used in coating in order to prevent detachment of the coating catalyst.

The abovementioned NOx-removing catalyst is not particularly limited as long as it is any of Ti/V, Ti/Mo/V and Ti/W/V.

The Si-V catalyst according to the present invention can be used even in exhaust gas at high temperatures (close to 350°C), and also has a high efficiency in oxidizing mercury while preventing oxidation of SO₂. Therefore, the catalyst can be incorporated in a NOx-removing apparatus used at temperatures close to 350°C, and this eliminates the need for placing an additional catalyst tower in a certain position halfway in a flue in which exhaust gas temperature is low. Therefore, the rise in the utility cost can be suppressed. Furthermore, the Si-V catalyst according to the present invention exhibits a low efficiency in oxidizing SO₂, and thus can be used even in exhaust gas containing SO₂ at a high concentration. If necessary, a higher efficiency in oxidizing mercury can be obtained by increasing the concentration of vanadium in the catalyst or increasing the catalyst amount or in other ways.

The same effect can be also obtained by coating the surface of a NOx-removing catalyst with the Si-V catalyst according to the present invention. This provides a catalyst that has the capabilities of catalyzing NOx removal and oxidizing mercury while having a low efficiency in oxidizing SO₂. As a result, the need for placing a mercury-oxidizing apparatus in addition to a NOx-removing apparatus is eliminated, and this enables downsizing exhaust gas-purifying apparatuses.

### (Example 1)

Colloidal silica (SiO₂) of 20 Wt% and vanadium sol (VO₂) of 10.5 Wt% were mixed in such a manner that the Si/V atomic ratio is 95/5, and the thus-obtained sol mixture was gelatinized by adding an appropriate amount of ammonia. Thereafter, the gel was evaporated at 150°C to dryness, for approximately two hours. The obtained particles were fired in the air at 500°C for two hours, and then ground to obtain Si-V catalyst particles. The Si-V catalyst particles were combined with an appropriate amount of purified water so as to provide Si-V catalyst slurry of 20 Wt%. After that, a corrugated honeycomb carrier that was composed of a nonwoven fabric of inorganic fiber and had a plate thickness of 0.2 mm (corrugation pitch: 3.7 mm; plate spacing: 2.2 mm) was impregnated with the abovementioned Si-V catalyst slurry, and then the liquid was removed. Subsequently, the carrier was dried at 150°C for two hours and then fired in the air at 500°C for two hours, and as a result, a catalyst in which the composition was Si/V = 95/5 (atomic ratio) and the amount of supported catalyst was 150 g/m² was obtained.

### (Example 2)

A catalyst in which the composition was Si/V = 95/5 (atomic ratio) and the amount of supported catalyst was 150 g/m² was prepared in a way similar to that for Example 1, except that the addition of ammonia to the sol mixture of colloidal silica and vanadium sol was omitted before the evaporation to dryness of the sol mixture at 150°C for approximately two hours.

### (Example 3)

A catalyst in which the composition was Si/V = 95/5 (atomic ratio) and the amount of supported catalyst was 150 g/m² was prepared in a way similar to that for Example 2, except that silica particles were used instead of the colloidal silica.

### (Example 4)

Titanium oxide, ammonium paratungstate, ammonium metavanadate, water and silica-based inorganic fiber were mixed and kneaded by means of a kneading machine so as to obtain catalyst paste having the composition of Ti/W/V = 94/5/1 (atomic ratio). A net substrate with a mesh size of approximately 2 mm was separately fabricated by metal lathing a strip of SUS430. The catalyst paste was placed on the substrate and allowed to pass through a pressure roller so that the catalyst was captured in the mesh and bonded to the surface and thus Plate-like Catalyst 1 with a thickness of 0.8 mm was obtained. The obtained catalyst was dried at 150°C for two hours and then fired in the air at 500°C for two hours. Subsequently, this plate-like catalyst was impregnated with the Si-V catalyst slurry described in Example 1, and then the liquid was removed. After that, the plate-like catalyst was dried at 150°C for two hours and then fired in the air at 500°C for two hours, and as a result, a catalyst supporting 50 g/m² of the Si-V catalyst on its surface was obtained.

### (Example 5)

A catalyst supporting 50 g/m² of the Si-V catalyst on its surface was prepared in a way similar to that for Example 4, except that ammonium molybdate was used instead of ammonium paratungstate so as to obtain Plate-like Catalyst 2 having the composition of Ti/Mo/V = 94/5/1 (atomic ratio).

### (Example 6)

Plate-like Catalyst 1 described in Example 4 was impregnated with sol obtained by mixing colloidal silica (SiO₂) of 20 Wt% and vanadium (VO₂) sol of 10.5 Wt% in such a manner that the Si/V atomic ratio was 95/5, and the liquid was removed. Subsequently, the plate-like catalyst was dried at 150°C for two hours and then fired in the air at 500°C for two hours, and thus a catalyst supporting 50 g/m² of the Si-V catalyst on its surface was obtained.

### (Example 7)

A catalyst was prepared in a way similar to that described in Example 6, except that Plate-like Catalyst 2 described in Example 5 was used instead of Plate-like Catalyst 1.

### (Comparative Example 1)

A corrugated honeycomb carrier having the same specifications as that used in Example 1 was impregnated with sol obtained by mixing titania sol (TiO₂) of 30 Wt% and vanadium sol (VO₂) of 10.5 Wt% in such a manner that the Ti/V atomic ratio was 95/5, and the liquid was sufficiently removed. Thereafter, the carrier was dried at 150°C for two hours and then fired at 500°C for two hours, and thus a catalyst in which the composition was Ti/V = 95/5 (atomic ratio) and the amount of supported catalyst was 50 g/m² was obtained.

### (Comparative Example 2)

Titania sol (TiO₂) of 30 Wt% and vanadium sol (VO₂) of 10.5 Wt% was mixed in such a manner that the Ti/V atomic ratio was 95/5, and the thus-obtained mixture was evaporated at 150°C to dryness, for approximately two hours. The obtained particles were fired in the air at 500°C for two hours, and then ground to obtain Ti-V catalyst particles. The Ti-V catalyst particles were combined with an appropriate amount of purified water so as to provide Ti-V catalyst slurry of 15 Wt%. Plate-like Catalyst 1 described in Example 4 was impregnated with this slurry, and then the liquid was removed. Subsequently, the catalyst was dried at 150°C for two hours and then fired in the air at 500°C for two hours, and thus a catalyst supporting 25 g/m² of the Ti-V catalyst on its surface was obtained.

### (Comparative Example 3)

A catalyst was prepared in a way similar to that described in Comparative Example 2, except that Plate-like Catalyst 2 described in Example 5 was used instead of Plate-like Catalyst 1.

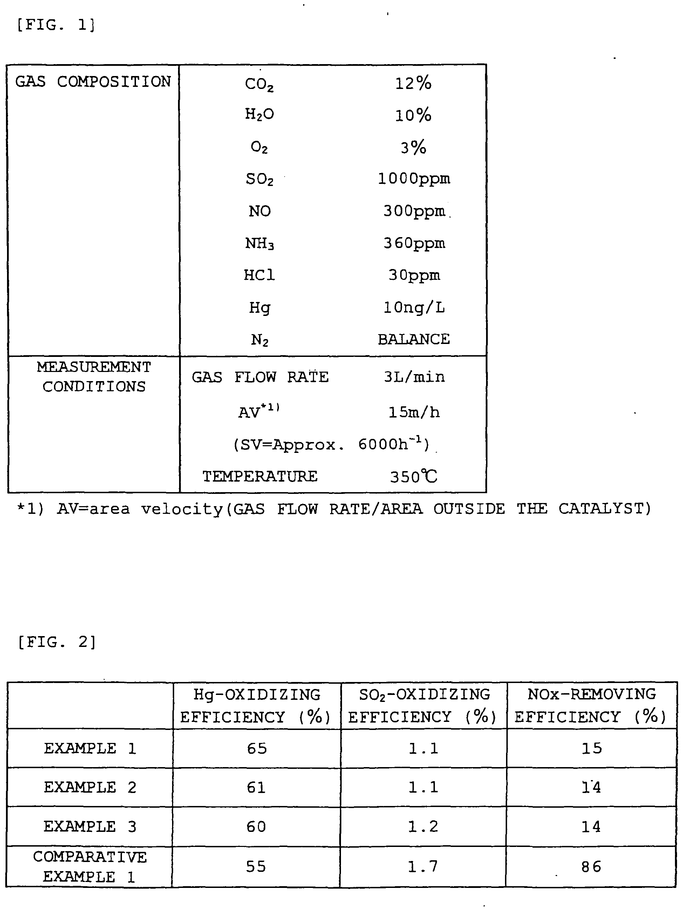

To assess the effect of the Si-V catalyst according to the present invention, exhaust gas was allowed to pass through and react with the catalysts described in Examples 1 to 7 and Comparative Examples 1 to 3 under the test conditions listed in Fig. 1, and the mercury-oxidizing efficiency, the SO₂-oxidizing efficiency and the NOx-removing efficiency were measured. In the drawing, AV represents area velocity (gas flow rate/area outside the catalyst).

Comparative Example 1 corresponds to Examples 1 to 3. Comparative Example 2, in which Plate-like Catalyst 1 used in Examples 4 and 6 was used, corresponds to these examples, and Comparative Example 3, in which Plate-like Catalyst 2 used in Examples 5 and 7 was used, corresponds to these examples.

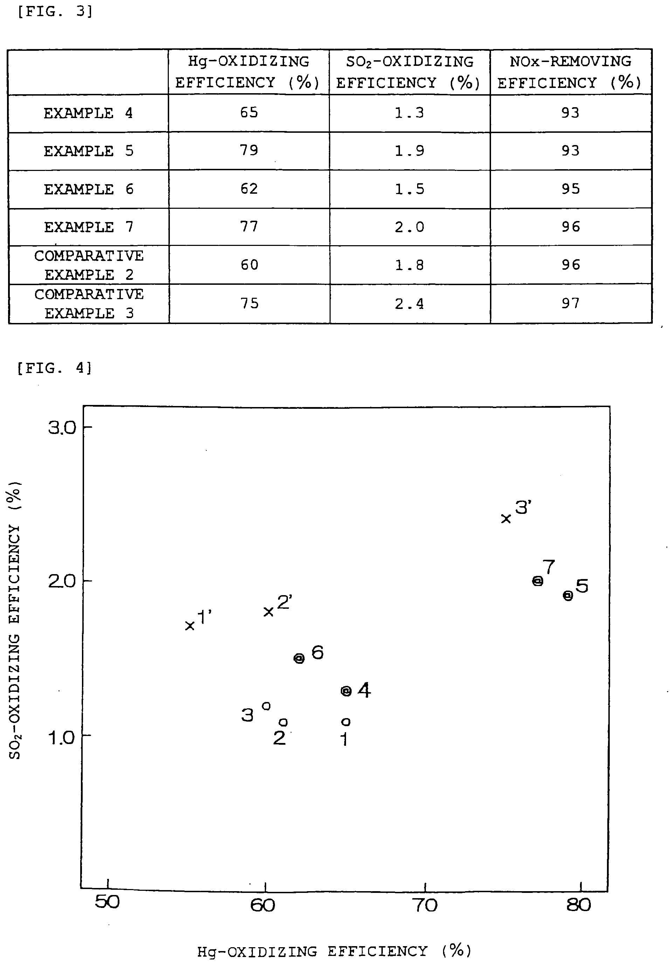

The obtained results are summarized in Figs. 2 and 3. In Fig. 2, test results are compared among the tests each using one of the Si-V catalysts described in Examples 1 to 3 and the test using the Ti-V catalyst described in Comparative Example 1. In Fig. 3, test results are compared among the tests each using one of the Si-V catalysts supported by a catalyst with a NOx-removing capability and described in Examples 4 to 7 and the tests each using one of the Ti-V catalysts supported by a catalyst with a NOx-removing capability and described in Comparative Examples 2 and 3.

As clearly seen in Fig. 2, the Si-V catalyst according to the present invention exhibited a higher efficiency in oxidizing mercury than the catalyst described in Comparative Example 1, while maintaining a low efficiency in oxidizing SO₂. Also, as clearly seen in Fig. 3, still in the case of the Si-V catalysts supported by a catalyst with a NOx-removing capability, Examples 4 and 6 each exhibited a higher efficiency in oxidizing mercury than Comparative Example 2, in which the same catalyst, Plate-like Catalyst 1, was used, while maintaining a low efficiency in oxidizing SO₂. Furthermore, although Comparative Example 3 exhibited a higher efficiency in oxidizing mercury than Examples 4 and 6, it also exhibited a higher efficiency in oxidizing SO₂ than Examples 4 and 6. Additionally, Examples 5 and 7 each exhibited a higher efficiency in oxidizing mercury than Comparative Example 3, in which the same catalyst, Plate-like Catalyst 2, was used, while having a lower efficiency in oxidizing SO₂ than Comparative Example 3.

Fig. 4 shows the data listed in Figs. 2 and 3, where the horizontal axis represents the Hg-oxidizing efficiency and the vertical axis represents the SO₂-oxidizing efficiency. In the drawing, the symbols indicated by numbers 1 to 7 represent the data for Examples 1 to 7 according to the present invention, and the other symbols indicated by 1' to 3' represent the data for Comparative Examples 1 to 3. Thus, the Si-V catalyst according to the examples of the present invention proved to exhibit a higher efficiency in oxidizing mercury and a lower efficiency in oxidizing SO₂ than Ti-V catalysts.

## Claims

1. An exhaust gas purifying catalyst comprising a porous catalyst having a reaction activity for NO and NH₃ for NOx removal, and a catalyst supported by the porous catalyst and adapted to catalyze an oxidative reaction of mercury metal contained in exhaust gas, wherein
the catalyst having a reaction activity for NO and NH₃ is any of Ti/V, Ti/Mo/V and Ti/W/V, and
the catalyst adapted to catalyze an oxidative reaction of mercury metal consists of silicon oxide and vanadium oxide, the Si/V atomic ratio being in the range of 99.5/0.5 to 85/15.

2. An exhaust gas purifying catalyst in accordance with claim 1, wherein the porous catalyst having a reaction activity for NO and NH₃ is a plate-like or honeycomb-like catalyst.

3. A method for producing the exhaust gas purifying catalyst of Claim 1, comprising the steps of forming a sol mixture of colloidal silica and vanadium oxide, immersing the porous catalyst in the formed sol mixture, and drying and/or firing the porous catalyst after immersion.

## Patentansprüche

1. Abgasreinigungskatalysator, der einen porösen Katalysator mit Reaktionsaktivität für NO und NH₃ zur NOx-Entfernung sowie einen vom porösen Katalysator getragenen Katalysator zur Katalyse einer Oxidationsreaktion von im Abgas enthaltenem Quecksilbermetall umfasst, wobei
der Katalysator mit Reaktionsaktivität für NO und NH₃ Ti/V, Ti/Mo/V und/oder Ti/W/V ist, und
der Katalysator zur Katalyse einer Oxidationsreaktion von Quecksilbermetall aus Siliziumoxid und Vanadiumoxid besteht, wobei das Si/V-Atomverhältnis im Bereich von 99,5/0,5 bis 85/15 liegt.

2. Abgasreinigungskatalysator nach Anspruch 1, wobei der poröse Katalysator mit Reaktionsaktivität für NO und NH₃ ein plattenartiger Katalysator oder wabenartiger Katalysator ist.

3. Verfahren zur Herstellung des Abgasreinigungskatalysators nach Anspruch 1 mit Schritten zum Bilden einer Solmischung aus kolloidalem Siliziumoxid und Vanadiumoxid, Tauchen des porösen Katalysators in die gebildete Solmischung und Trocknen und/oder Brennen des porösen Katalysators nach dem Tauchvorgang.

## Revendications

1. Catalyseur de purification de gaz d'échappement comprenant un catalyseur poreux ayant une activité de réaction pour NO et NH₃ pour une élimination de NOx, et un catalyseur supporté par le catalyseur poreux et adapté à catalyser une réaction oxydative de mercure métallique contenu dans des gaz d'échappement, dans lequel
le catalyseur ayant une activité de réaction pour NO et NH₃ est l'un quelconque parmi Ti/V, Ti/Mo/V et Ti/W/V, et
le catalyseur adapté à catalyser une réaction oxydative de mercure métallique consiste en oxyde de silicium et oxyde de vanadium, le rapport atomique Si/V étant dans la plage de 99,5/0,5 à 85/15.

2. Catalyseur de purification de gaz d'échappement selon la revendication 1, dans lequel le catalyseur poreux ayant une activité de réaction pour NO et NH₃ est un catalyseur de type en plaque ou de type en nid d'abeilles.

3. Procédé pour produire le catalyseur de purification de gaz d'échappement selon la revendication 1, comprenant les étapes de formation d'un sol mixte de silice colloïdale et d'oxyde de vanadium, d'immersion du catalyseur poreux dans le sol mixte formé, et de séchage et/ou de cuisson du catalyseur poreux après immersion.
